# EUROPEAN PATENT APPLICATION

(11) **EP 3 130 389 A1**
(43) Date of publication of application: **15.02.2017**
(21) Application number: 15180529.8
(22) Date of filing: 11.08.2015
(51) Int. Cl.: B01D 53/26, B01D 53/56

(54) **PROCESS AND APPARATUS FOR REMOVING ACIDIC GASES AND/OR ACIDS WITH AN UPSTREAM ACID REMOVAL BED AND A DOWNSTREAM DESICCANT DRYER**

(71) Applicant: General Electric Technology GmbH, 5400 Baden (CH)
(72) Inventor: Wang, Wuyin, 35249 Växjö (SE); Britz, Christian Karl, 65193 Wiesbaden (DE)
(74) Representative: General Electric Technology GmbH

(57) **Abstract**

Process for removing acidic gases and/or acids from a flue gas stream generated by a combustion process of fossil fuel, preferably generated in an oxyfuel process of a power plant, wherein water is removed from a compressed flue gas stream in a compressed flue gas desiccant dryer of a gas processing unit, wherein acidic gases and/or acids are removed in the gas processing unit by use of an acid removal bed upstream of the desiccant dryer.

## Description

### BACKGROUND OF INVENTION

The invention relates to a process for removing acidic gases, for example NO, NO₂, N₂O₃ and N₂O₄, and/or their related acids, for example HNO₃ and HNO₂, from a flue gas stream generated by a combustion process of a fossil fuel, preferably generated in an oxyfuel process of a power plant. The invention furthermore relates to an apparatus for removing acidic gases and/or acids from a flue gas stream generated by a combustion process of a fossil fuel, preferably generated in an oxyfuel process of a power plant, comprising a gas processing unit which comprises a compressed flue gas desiccant dryer for removing moisture from the flue gas stream.

### PRIOR ART

Power plants, i.e. industrial technical plants for the supply of in particular electrical and partially of thermal power are indispensable to ensure the power supply of a national economy. In such power plants primary energy is used, which is made available as useful energy after appropriate transformation. Flue gas streams usually result from the transformation process, i.e. from the combustion of fossil fuel, which cannot be transferred without further cleaning steps to the environment. In particular in power stations with fossil combustibles to be burned, e.g. coal, oil or natural gas, exhaust gas streams designated as flue gases are generated, which contain components harmful to the environment. One problem is for example the formation of nitrogen oxides, particularly when fossil raw materials are burned. These nitrogen oxides can result in different ways, for example from the oxidation of nitrogen present in the combustion air and/or from nitrogen present in the combustibles. Primary measures for reducing the formation of nitrogen oxides include for example a decrease of the combustion temperature through the recycling of exhaust gases. The valid exhaust emission limits can usually be complied with by these primary measures in lignite fired power stations. In hard coal fired power stations on the other hand already today secondary measures are necessary, in order to reduce the nitrogen oxide output. In practice only the so-called selective non-catalytic reduction (SNCR) and the so-called selective catalytic reduction (SCR) processes are then used. If particularly low nitrogen oxide values in the exhaust gases are to be achieved, then the selective catalytic reduction (SCR) process is the procedure of choice.

The basic oxy-firing concept uses a mixture of nearly pure oxygen and recirculated flue gas to replace combustion air, which after combustion produces a flue gas comprising mainly CO₂ and water vapor and small amounts of oxygen, nitrogen, argon, sulfur dioxide, etc. The flue gas leaving the boiler is cooled, cleaned of ash and sulfur compounds in the Air Quality Control System (AQCS), and finally dried, compressed and purified in the Gas Processing Unit (GPU) for sequestration. It is a goal of these new concepts to capture and store the carbon dioxide that is generated when burning the fossil combustibles in suitable stores, in particular by injecting it into certain rock formations or seawater-prominent layers and thus limit the carbon dioxide output to the atmosphere. Therefore, the harmful effect of greenhouse gases such as carbon dioxide can be reduced. Such power plants are known as "oxyfuel" - power plants.

Besides carbon dioxide, the flue gas of these power plants also comprises other gaseous components harmful to the environment, such as dust, sulfur dioxides and nitrogen dioxides. To fulfill legal emission requirements for the flue gas emissions into the atmosphere and/or requirements regarding the carbon dioxide storage, it is necessary to provide flue gas cleaning systems to remove also these components. These systems are usually of similar type as in conventional power plants. In particular maximum limits for the nitrogen oxide content are to be considered in the case of transport of the carbon dioxide-rich product in pipe-lines to further use or storage as well as for storing in geological formations. Therefore, well-known concepts are used in sequential steps for dedusting, removal of nitrogen oxides and desulfurization of the flue gas.

In a flue gas cleaning process of an "oxyfuel" - power plant, the flue gas is often further treated in a gas processing unit (GPU), wherein the flue gas is compressed in a compression stage, mercury is removed in an activated carbon bed and water is removed in a desiccant dryer, before carbon dioxide is separated from the flue gas by use of e.g. a cold box.

Despite the removal of nitrogen oxides upstream of the gas processing unit, it cannot be guaranteed that the flue gas entering the gas processing unit is free of acidic gases and acids. Moreover, in the desiccant dryers, the desiccant material used is not always acid-resistant. Therefore, acidic gases and acids contained in the flue gas entering the gas processing unit can lead to a degradation of the dryer desiccant material.

It is therefore known from the prior art to provide two dryers in serial connection wherein the first dryer comprises a dryer desiccant which is resistant to acidic gases and/or acids and to remove water in the first and second dryer. Nevertheless, the desiccant in the second dryer can still be degraded. Moreover, such acid resistant dryer desiccants are more expensive.

### SUMMARY OF THE INVENTION

It is therefore an object of the present invention to provide a process for removing nitrous acids and/or nitric oxides acidic gases and/or acids from a flue gas stream generated by a combustion process of fossil fuel, preferably generated in an oxyfuel process of a power plant, wherein the dryer desiccant in the dryer is protected from degradation. This object is solved by a process according to the features of claim 1.

The process is characterized by removing acidic gases and/or acids by use of an acid removal bed in the gas processing unit upstream of the desiccant dryer. Removing the acidic gases and/or acids from the flue gas stream upstream of the desiccant dryer provides for the advantage that the flue gas entering the desiccant dryer for the most part is free of acidic gases and/or acids such that a degradation of the dryer desiccant can be prevented.

Acid removal beds are provided to remove acidic gases and/or acids; at the acid removal bed acidic gases and/or acids but no water or moisture is adsorbed and removed.

In a first preferred embodiment of the process, the acidic gases and/or acids are removed in an acid removal bed directly upstream of an activated carbon bed. Removing the acidic gases and/or acids directly upstream of an activated carbon bed provides the advantage that the acid removal bed can be arranged on top of the activated carbon bed and replaced batch-wise as soon as the sorbent in the acid removal bed is degraded together with the top layer of the activated carbon bed which has to be replaced before it is clogged by fine dust.

In another embodiment of the process, the acidic gases and/or acids are removed in an acid removal bed directly upstream of the desiccant dryer. It is particularly preferred if two acid removal beds are provided wherein acidic gases and/or acids are removed directly upstream of an activated carbon bed and directly upstream of the desiccant dryer. By providing two acid removal beds, the acidic gases and/or acids can be removed even more effectively.

In another preferred embodiment of the process, activated aluminum, silica gel, or a molecular sieve is used as dryer desiccants.

Particularly preferred materials to be used as sorbents in the acid removal bed are Ca(OH)₂, CaCO₃, CaSO₃, MgCO₃, Mg(OH)₂, Na₂CO₃, NaHCO₃ and CaMg(CO₃)₂. These materials are practically neutral to water and using at least one or more of those sorbents has been shown to be very effective in order to remove acidic gases and/or acids from the flue gas.

The object of the invention is furthermore solved by an apparatus for removing acidic gases and/or acids from a flue gas stream generated by a combustion process of fossil fuel, preferably generated in an oxyfuel process of a power plant according to the features of claim 6.

Such an apparatus comprises a gas processing unit which comprises a compressed flue gas desiccant dryer for removing water from a compressed flue gas stream and is characterized in that the gas processing unit comprises an acid removal bed configured to remove acidic gases and/or acids arranged upstream of the desiccant dryer. Arranging an acid removal bed configured to remove acidic gases and/or acids upstream of the desiccant dryer provides for the advantage that the flue gas entering the desiccant dryer for the most part is free of acidic gases and/or acids such that a degradation of the dryer desiccant can be prevented.

In a preferred embodiment of the apparatus, the gas processing unit comprises an activated carbon bed, wherein the acid removal bed is arranged directly upstream of the activated carbon bed.

In a further preferred embodiment of the apparatus, the acid removal bed is arranged directly upstream of the desiccant dryer. It is particularly preferred if two acid removal beds are provided wherein acidic gases and/or acids are removed directly upstream of an activated carbon bed and directly upstream of the desiccant dryer. By providing two acid removal beds, nitrous acids and/or nitric oxides acidic gases and/or acids can be removed even more effectively.

According to a particularly preferred embodiment of the apparatus, the activated carbon bed comprises a top layer wherein the acid removal bed is arranged on top of the top layer.

It is particularly preferred if the top layer is configured to be replaced batch-wise. Arranging the acid removal bed on a top layer of the activated carbon bed which is configured to be replaced batch-wise provides the advantage that the acid removal bed can be replaced together with the top layer of the activated carbon bed as soon as the sorbent in the acid removal bed is degraded. The top layer of the activated carbon bed usually has to be replaced on a regular basis before it becomes clogged by fine dust.

In another preferred embodiment of the apparatus, the compressed flue gas desiccant dryer is configured to use activated aluminum, silica gel, or a molecular sieve as dryer desiccant.

### BRIEF DESCRIPTION OF THE DRAWINGS

The invention is explained in more detail on the basis of an exemplary embodiment and on the basis of the figures 1 to 3.

The drawings show:
- Fig. 1: a schematic drawing of an oxyfuel process in an industrial power plant;
- Fig. 2: a schematic drawing of a gas processing unit of the oxyfuel process according to Fig. 1; and
- Fig. 3: a schematic drawing of an activated carbon bed of the gas processing unit according to Fig 2.

### DETAILED DESCRIPTION OF THE DRAWINGS

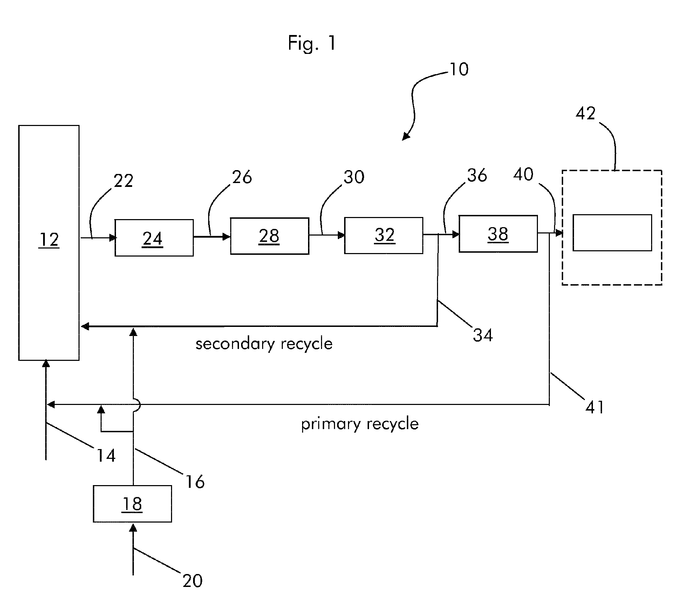

Figure 1 shows a schematic drawing of an oxyfuel process (10) in an industrial power plant.

Oxyfuel combustion is the process of burning a fuel using a mixture of nearly pure oxygen and recirculated flue gas to replace combustion air as oxidant.

The oxyfuel process (10) of Fig. 1 comprises a steam generator unit (12) in which fossil fuel is burned to produce steam which is used in a steam turbine for generating electric power. The steam generator unit (12) is supplied with a fossil fuel such as coal (14) and with oxygen-rich gas (16), produced from ambient air (20) in an air separation unit (ASU) (18). The oxygen-rich gas (16) produced in the ASU and supplied to the steam generator unit (12) contains an oxygen portion of about 95 to 99.9 VOL %.

Flue gas generated in the steam generator unit (12) by burning coal (14) leaves the steam generator (12) as a flue gas stream (22). For the removal of nitric oxides, the flue gas stream (22) can be optionally fed (if needed) to a selective catalytic reduction (SCR) system (24) in which nitrogen oxides are removed by selective catalytic reduction.

The flue gas leaving the optional SCR system (24) is supplied as a flue gas stream (26) to a dust removal system (28) such as a fabric filter or an electrostatic precipitator.

The flue gas leaving the dust removal system (28) is supplied as a flue gas stream (30) to a sulfur dioxide removal system (32) such as a wet scrubber, wherein a first part (34) of the flue gas leaving the sulfur dioxide removal system (32) is recycled to the steam generator unit (12) as secondary recycle to control the temperature in the steam generator unit (12). Optionally and especially with low sulfur coals, the flue gas is recycled upstream the sulfur dioxide removal system (32).

The second part of the flue gas leaving the sulfur dioxide removal system (32) is supplied as a flue gas stream (36) to a flue gas conditioning unit (FGC) (38) where water is condensed out of the flue gas to reduce its moisture content. The flue gas leaving the FGC (38) is partly supplied to a gas processing unit (GPU) as a flue gas stream (40) and partly recycled back to the steam generator unit (12) as primary recycle (41) to support the combustion process.

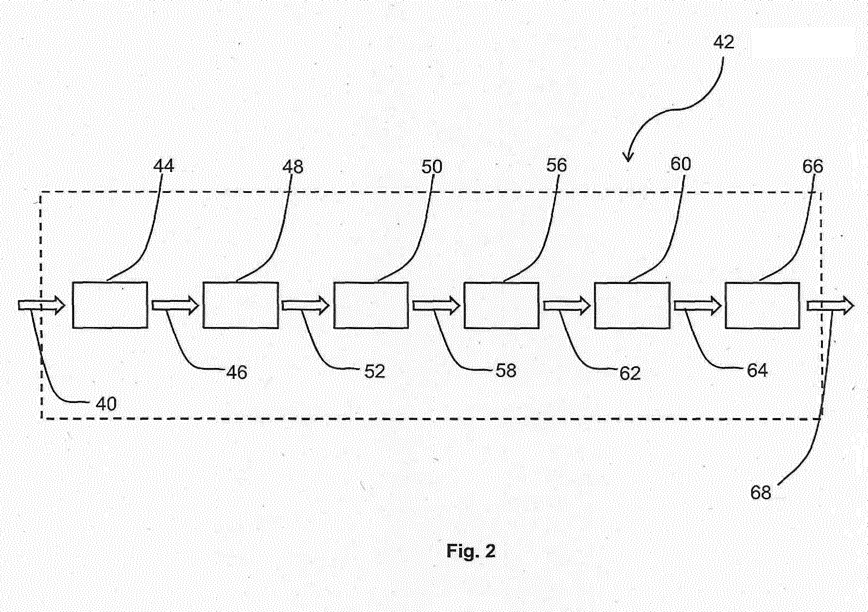

The GPU (42) which is depicted in Figure 1 is shown in more detail in Figure 2.

The flue gas stream (40) coming from the flue gas conditioning unit (38) is fed to the gas processing unit (42), more specifically to a compression stage (44) of the gas processing unit (42) in which the flue gas is pressurized to a pressure of about 35 bars or more. The flue gas is leaving the compression stage (44) as a pressurized flue gas stream (46) and fed to a first acid removal bed (48) in which acid gases and/or acids are removed by use of a sorbent such as Ca(OH)₂, CaCO₃, CaSO₃, MgCO₃, Mg(OH)₂, Na₂CO₃, NaHCO₃ or CaMg(CO₃)₂.

The first acid removal bed (48) is arranged directly upstream of an activated carbon bed (50), wherein the flue gas leaving the first acid removal bed (48) is fed to the activated carbon bed (50) as flue gas stream (52).

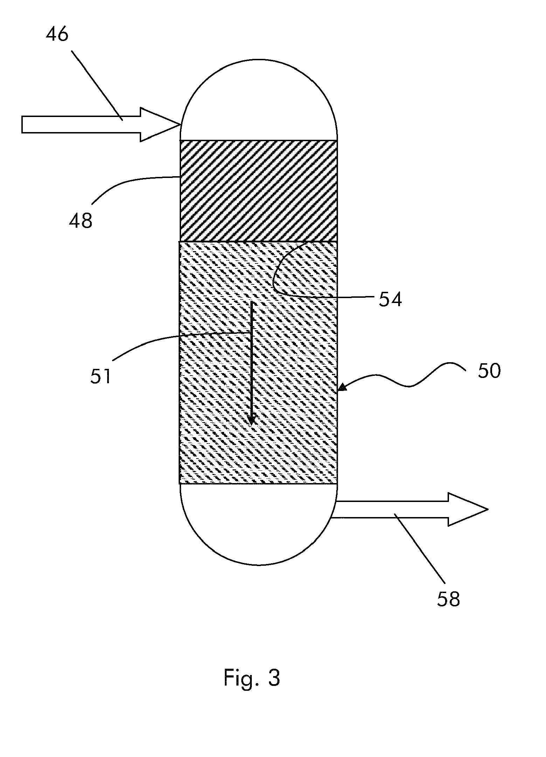

The activated carbon bed (50) of Figure 2 is shown in more detail in Figure 3. The activated carbon bed (50) comprises a top layer (54) wherein the acid removal bed (48) is arranged on top of the top layer (54). The flue gas is flowing through the activated carbon bed (50) in the direction of the arrow (51). The top layer (54) of the activated carbon bed (50) has to be replaced regularly before it is clogged for example by fine dust. Therefore, the acid removal bed (48) can be replaced batch-wise along with the top layer (54) of the activated carbon bed (50) to provide for fresh sorbent in the acid removal bed (48). Flue gas leaving the activated carbon bed (50) is supplied to a second acid removal bed (56) as a flue gas stream (58).

In the second acid removal bed (56) acid gases and/or acids are removed by use of a sorbent such as Ca(OH)₂, CaCO₃, CaSO₃, MgCO₃, Mg(OH)₂, Na₂CO₃, NaHCO₃ or CaMg(CO₃)₂.

The flue gas leaving the second acid removal bed (56) is fed to a compressed flue gas desiccant dryer (60) as a flue gas stream (62) for removing moisture from the flue gas stream (62). Since acidic gases and/or acids are removed in the first acid removal bed (48) and in the second acid removal bed (56), the dryer desiccants, which are preferably activated aluminum, silica gel, or a molecular sieve cannot be degraded or otherwise destroyed by acid gases and/or acids. Therefore, the dryer desiccant lifespan can be extended.

It is particularly preferred to use both the first acid removal bed (48) and the second acid removal bed (56) in order to thoroughly remove acidic gases and/or acids from the flue gas.

It is also noted that the gas processing unit (42) can also work if either the first acid removal bed (48) is provided and not the second acid removal bed (56) or if the second acid removal bed (56) is provided and not the first acid removal bed (48).

The flue gas leaving the desiccant dryer (60) is fed as flue gas stream (64) to a CO₂ separation unit (66) such as a cold box. In the cold box, CO₂ is separated for storage from the remaining gas and leaves the CO₂ separation unit (66) as CO₂ stream (68). This CO₂ can then be injected into rock formations or seawater-prominent layers of the ground or stored in a different way and thus limit the carbon dioxide (CO₂) output to the atmosphere.

### LIST OF REFERENCE NUMERALS

- 10: oxyfuel process
- 12: steam generator unit
- 14: coal
- 16: oxygen-rich air
- 18: air supply unit (ASU)
- 20: ambient air
- 22: flue gas stream
- 24: selective catalytic reduction (SCR) system
- 26: flue gas stream
- 28: dust removal system
- 30: flue gas stream
- 32: sulfur oxide removal system
- 34: secondary recycle
- 36: flue gas stream
- 38: flue gas conditioning (FGC) unit
- 40: flue gas stream
- 41: primary recycle
- 42: gas processing unit (GPU)
- 44: compression stage
- 46: flue gas stream
- 48: first acid removal bed
- 50: activated carbon bed
- 51: arrow
- 52: flue gas stream
- 54: top layer
- 56: second acid removal bed
- 58: flue gas stream
- 60: compressed air desiccant dryer
- 62: flue gas stream
- 64: flue gas stream
- 66: CO₂ separation unit
- 68: CO₂ stream

## Claims

1. Process for removing acidic gases and/or acids from a flue gas stream generated by a combustion process of fossil fuel, preferably generated in an oxyfuel process of a power plant, wherein water is removed from a compressed flue gas stream in a compressed flue gas desiccant dryer (60) of a gas processing unit (42), **characterized by** removing acidic gases and/or acids by use of an acid removal bed (48, 56) in the gas processing unit (42) upstream of the desiccant dryer (60).

2. Process according to claim 1, wherein the acidic gases and/or acids are removed in an acid removal bed (48) directly upstream of an activated carbon bed (50).

3. Process according to claim 1 or 2, wherein the acidic gases and/or acids are removed in an acid removal bed (56) directly upstream of the desiccant dryer (60).

4. Process according to anyone of the preceding claims, wherein at least one among activated aluminum, silica gel, or a molecular sieve is used as dryer desiccant.

5. Process according to anyone of the preceding claims, wherein at least one among Ca(OH)₂, CaCO₃, CaSO₃, MgCO₃, Mg(OH)₂, Na₂CO₃, NaHCO₃ or CaMg(CO₃)₂ is used as a sorbent in the acid removal bed (48, 56).

6. Apparatus for removing acidic gases and/or acids from a flue gas stream generated by a combustion process of fossil fuel, preferably generated in an oxyfuel process of a power plant, comprising a gas processing unit (42) which comprises a compressed flue gas desiccant dryer (60) for removing water from a compressed flue gas stream, **characterized in that** the gas processing unit (42) comprises an acid removal bed (48, 56) configured to remove acidic gases and/or acids arranged upstream of the desiccant dryer (60).

7. Apparatus according to claim 6, wherein the gas processing unit (42) comprises an activated carbon bed (50), wherein the acid removal bed (48) is arranged directly upstream of the activated carbon bed (50).

8. Apparatus according to claim 6 or 7, wherein the acid removal bed (56) is arranged directly upstream of the desiccant dryer (60).

9. Apparatus according to claim 7 or 8, wherein the activated carbon bed (60) comprises a top layer (54) wherein the acid removal bed (56) is arranged on top of the top layer (54).

10. Apparatus according to claim 9, wherein the top layer (54) is configured to be replaced batch-wise.

11. Apparatus according to any one of claims 6 to 10, wherein the compressed flue gas desiccant dryer (60) is configured to use at least one among activated aluminum, silica gel, or a molecular sieve as dryer desiccant.
